# EUROPÄISCHE PATENTSCHRIFT

(11) **EP 2 675 620 B1**
(45) Veröffentlichungstag und Bekanntmachung des Hinweises auf die Patenterteilung: **23.05.2018**
(21) Anmeldenummer: 11776765.7
(22) Anmeldetag: 27.10.2011
(51) Int. Cl.: B32B 15/01, C22C 21/00, C23C 30/00, F16C 33/12

(54) **VERFAHREN ZUR HERSTELLUNG EINES BLEIFREIEN, PLATTIERTEN ALUMINIUMGLEITLAGERS**
METHOD FOR PRODUCING A LEAD-FREE, PLATED ALUMINIUM PLAIN BEARING
PROCÉDÉ DE FABRICATION D'UN PALIER LISSE EN ALUMINIUM PLAQUÉ SANS PLOMB

(30) Priorität: 15.02.2011 DE 102011004133
(43) Veröffentlichungstag der Anmeldung: 25.12.2013
(73) Patentinhaber: Federal-Mogul Wiesbaden GmbH, 65201 Wiesbaden (DE)
(72) Erfinder: SCHMITT, Holger, 64319 Pfungstadt (DE); MEISTER, Daniel, 55246 Mainz-Kostheim (DE); ANDLER, Gerd, 65307 Bad Schwalbach (DE); COSENTINO, Gaetano, Fabio, 65201 Wiesbaden (DE)
(74) Vertreter: Hoffmann Eitle
(86) Internationale Anmeldenummer: PCT/EP2011/068863
(87) Internationale Veröffentlichungsnummer: WO 2012/110115

(56) Entgegenhaltungen:
- EP-A1- 2 105 512
- WO-A1-96/11800
- DE-A1- 19 833 200
- DE-A1-102005 047 037

## Beschreibung

### Technisches Gebiet

Die Erfindung betrifft ein Verfahren zur Herstellung eines Gleitlagers aus einer Aluminium-Eisen-Silizium-Legierung. Ferner betrifft die Erfindung ein Gleitlager mit einer Gleitfläche aus einer Aluminium-Eisen-Silizium-Legierung,

### Stand der Technik

Bei der Herstellung von Gleitlagern, insbesondere von Pleuellagern für Verbrennungsmotoren ist es nötig, Werkstoffe zu benutzen, die sich durch eine hohe Abriebfestigkeit auszeichnen. Ferner ist es sinnvoll, dass die Legierungen, die als Werkstoffe für solche Anwendungen benutzt werden, sich durch eine sehr gute Verfügbarkeit und einen niedrigen Preis auszeichnen. Ferner ist es weiterhin wünschenswert, dass die Materialien der Gleitlager eine moderate Härte aufweisen, um für eine gute Einbettfähigkeit von Hartpartikeln (Verschmutzungen) im Motor zu sorgen.

In der Vergangenheit sind Gleitlager oft aus Legierungen hergestellt worden, deren chemische Zusammensetzung durch die Zugabe von immer mehr Legierungselementen immer komplizierter wurde. Im Hinblick auf eine motorische Gleitpaarung zeigt die DE 10 2005 047 037 A1 eine Aluminiumbasislegierung für Gleitelemente eines Verbrennungsmotors oder Hydrauliksystems, welche unter den Reibungszuständen der Mischgrenzreibung und/oder der Hydrodynamik, aber auch des Trockenlaufs betrieben werden sollen, welche dadurch gekennzeichnet ist, dass diese im Werkstoffvolumen und/oder an der Reiboberfläche aus einer Aluminiumbasislegierung mit mindestens 80 Gew.-% Aluminium besteht.

Die US 2003/0185701 A1 beschreibt einen Prozess für die Herstellung einer Aluminium-Eisen-Vanadium-Silizium-Legierung, welche sich durch eine hohe Festigkeit und hohe Verschleißbeständigkeit auszeichnen soll. Hierbei werden die primären intermetallischen Phasen modifiziert, ebenso wie die interdentritischen Silizidphasen, indem die Schmelze mit elementarem Magnesium oder Legierungen, die Magnesium enthalten, behandelt wird. Weiteren Stand der Technik bilden DE 10 2004 025 557 A1 und US 2009-0245702 A1 Die DE 19833200 erwähnt einen Gleitlagerwerkstoff auf Aluminiumbasis, umfassend eine Aluminiumlegierung mit 10 bis 25 Masse-% Zinn oder 5-25 Masse-% Blei gekennzeichnet durch 0,75 bis 2,5 Masse-% Eisen und Legierungszusätze von Mangan und Silizium.

### Darstellung der Erfindung

Der Erfindung liegt die Aufgabe zugrunde, ein Verfahren zur Herstellung eines Gleitlagers zu schaffen, bei dem eine Legierung eingesetzt werden soll, die im Gegensatz zu bisherigen plattierten, bleifreien Aluminiumwerkstoffen eine einfachere chemische Zusammensetzung und Herstellbarkeit bei gleichzeitig verbesserten Gleiteigenschaften aufweist.

Die Lösung dieser Aufgabe erfolgt durch das im Patentanspruch 1 beschriebene Verfahren.

Demzufolge wird ein Gleitlager hergestellt, indem eine Aluminium-Eisen-Silizium-Legierung auf einen Stahlrücken aufgewalzt wird. Aluminium-Eisen-Silizium-Legierung zeichnen sich durch eine geringe Dichte aus, was sich vorteilhaft für das resultierenden Bauteil in einem geringen Gewicht äußert. Ferner weisen sie eine moderate Härte auf, was für die Anwendung in einem Gleitlager von Vorteil ist, da dadurch nur geringer Abrieb des Materials, mit dem das Gleitlager in Kontakt steht, auftritt. Außerdem sind die Materialien billig und die Legierung ist aufgrund ihrer Zusammensetzung leicht herstellbar.

Bevorzugte Ausführungsformen des Verfahrens werden in den Patentansprüchen 2 bis 8 beschrieben. Die Legierung weist bis zu 10 % Eisen und bis zu 3 % Silizium auf. Die Angabe % bezieht sich hier und im Folgenden auf Gewichtsprozent. Hierdurch kann die resultierende Endhärte der dadurch entstehenden Legierung eingestellt werden.

Erfindungsgemäß liegt das Eisen-Silizium Verhältnis zwischen 2:1 und 4:1. Hierdurch können sich je nach gewünschter Endhärte Eisensilizide und Aluminium-Eisen-Verbindungen bilden, welche eine gezielte Einstellung der gewünschten Endhärte des Materials erlauben.

Weiterhin wird bevorzugt, dass die Aluminium-Eisen-Silizium-Legierung bis zu 20 %, besonders bevorzugt bis zu 15 % Zinn aufweist. Hierdurch können die Gleiteigenschaften und die mechanischen Eigenschaften hinsichtlich der Anwendung als Gleitlager angepasst werden.

Weiterhin wird bevorzugt, dass die Aluminium-Eisen-Silizium-Legierung bis zu 0,2 %, noch mehr bevorzugt 0,02 bis 0,05 %, Strontium und/oder Natrium aufweist. Hierdurch kann das Ausscheidungsverhalten der Eisensilizide und Aluminium-Eisen-Verbindungen verbessert werden. Insbesondere können dabei Form und Größe der Ausscheidungen beim Gießen eingestellt werden. Außerdem wird eine möglichst feine Verteilung der Eisensilizidteilchen und der Aluminium-Eisen-Verbindungs-Teilchen erzielt, was gleichmäßige mechanische Eigenschaften des Materials erzeugt. Die Zugabe von Natrium führt zu feineren Ausscheidungen, die dafür aber in höherer Anzahl auftreten (siehe z. B. "Schmelzbehandlung von Aluminium und Aluminiumlegierungen mit MTS" veröffentlicht vom FOSECO).Ferner wird eine hohe Wärmeleitfähigkeit erreicht, die in etwa derjenigen von reinem Aluminium entspricht und die eine bessere Wärmeabfuhr unter Mischreibungsbedingungen bewirkt.

Weiterhin wird bevorzugt, dass der Stahlrücken vorzugsweise C10- oder C22-Stahl aufweist. Dieses Material, auf das die Aluminium-Eisen-Silizium-Legierung aufgewalzt (plattiert) wird, hat den Vorteil, dass das Material kostengünstig und einfach zu beschaffen ist und sich durch gute mechanische Eigenschaften, insbesondere eine hohe Festigkeit, auszeichnet. Die Ausführungsform besteht darin, dass das Verfahren folgende Schritte in der angegebenen Reihenfolge aufweist:
(A) Schmelzen des Materials der Aluminium-Eisen-Silizium-Legierung,
(B) Vergießen des in Schritt (A) erzeugten Materials,
(C) Erhitzen des in Schritt (B) erzeugten Materials,
(D) Abwalzen des in Schritt (C) erzeugten Materials
(E) Aufwalzen des in Schritt (D) abgewalzten Materials auf einen Stahlträger, der später zumindest einen Teil des Stahlrückens bildet,
(F) Erhitzen des in Schritt (E) erzeugten Werkstoffs,
(G) Optional: Verformen des in Schritt (F) erzeugten Werkstoffs.

Ein Vorteil dieses Verfahrens ist, dass durch die Verfahrensschritte die anschließende Härte des resultierenden Werkstoffs gut kontrolliert werden kann. Da, wie bereits vorher erwähnt, eine moderate Härte gewünscht ist, kann somit eine gute Anpassung des dadurch hergestellten Werkstoffs an die gewünschte Anwendung erfolgen. Ferner sind sämtliche Schritte leicht industriell ausführbar, was sich auch in vergleichsweise geringen Kosten für die Ausführung des Verfahrens äußert.

Weiterhin wird bevorzugt, dass bei dem Vergießen in Schritt (B) das Material mittels eines Stranggießverfahrens zu einem Strang vergossen wird. Dies hat den Vorteil, dass ein Strang industriell leicht bearbeitbar ist.

Weiterhin wird bevorzugt, dass das Erhitzen in Schritt (C) bei einer Temperatur von etwa 450 - 550 °C durchgeführt wird und 10 - 20 Stunden dauert. Der Vorteil davon ist, dass hierdurch die Härte des resultierenden Materials deutlich abnimmt, was insbesondere den sich daran anschließenden Abwalzschritt (D) erleichtert. Ferner führt dies zu einer Homogenisierung des Materials.

Weiterhin wird bevorzugt, dass das Abwälzen in Schritt (D) zu einer Dicke des Materials von etwa 0,8 - 1,2 mm führt. Dies hat den Vorteil, dass das somit recht dünne Material für eine Verwendung und eine Aufplattierung (E), wie sie in dem nächsten Schritt erfolgt, gut vorbereitet ist.

Ferner wird bevorzugt, dass das Erhitzen im Schritt (F) 6 - 10 Stunden dauert und bei etwa 180°C - 240°C erfolgt. Hierdurch wird die Härte abgesenkt, während gleichzeitig die gewünschte Einbettfähigkeit gewährleistet wird, indem Versetzungen abgebaut werden. Beide Effekte sind für die Verwendung des Werkstoffs in einem Gleitlager von Vorteil.

Weiterhin wird bevorzugt, dass das Walzen in Schritt (G) so erfolgt, dass um 5 -15 % verformt wird. Hierdurch kann erreicht werden, dass die Härte des fertigen Werkstoffs der Anwendung angepasst werden kann.

Eine weitere Lösung der Aufgabe besteht in einem Gleitlager nach Anspruch 9. Das erfindungsgemäße Gleitlager weist eine Gleitfläche mit einer Aluminium-Eisen-Silizium-Legierung auf. Dies hat die Vorteile, die auch mit Bezug auf Anspruch 1 genannt wurden.

Erfindungsgemäß liegt das Eisen-Silizium Verhältnis zwischen 2:1 und 4:1. Hierdurch können sich je nach gewünschter Endhärte Eisensilizide und Aluminium-Eisen-Verbindungen bilden, welche eine gezielte Einstellung der gewünschten Endhärte des Materials erlauben.

Weiterhin wird bevorzugt, dass die Aluminium-Eisen-Silizium-Legierung bis zu 15 % Zinn aufweist. Hierdurch können die Gleiteigenschaften und die mechanischen Eigenschaften hinsichtlich der Anwendung als Gleitlager angepasst werden.

Weiterhin wird bevorzugt, dass die Aluminium-Eisen-Silizium-Legierung bis zu 0,2 %, bevorzugt 0,02 bis 0,05 %, Strontium oder Natrium aufweist. Hierdurch kann das Ausscheidungsverhalten und die Ausscheidungsform der Eisensilizide und Aluminium-Eisen-Verbindungen verbessert werden. Insbesondere können dabei Form und Größe der Ausscheidungen eingestellt werden. Außerdem wird eine möglichst feine Verteilung der Eisensilizidteilchen und der Aluminium-Eisen-Verbindungs-Teilchen erreicht, was für gleichmäßige mechanische Eigenschaften des Materials sorgt. Ferner wird eine hohe Wärmeleitfähigkeit erreicht, die in etwa derjenigen von reinem Aluminium entspricht und die eine bessere Wärmeabfuhr unter Mischreibungsbedingungen bewirkt. Das Lagermaterial weist eine Härte von 40 - 60 HBW 1/5/30 auf. Dies hat den Vorteil, dass diese Härte für eine Anwendung in einem Gleitlager gut geeignet ist.

### Kurze Beschreibung der Zeichnung

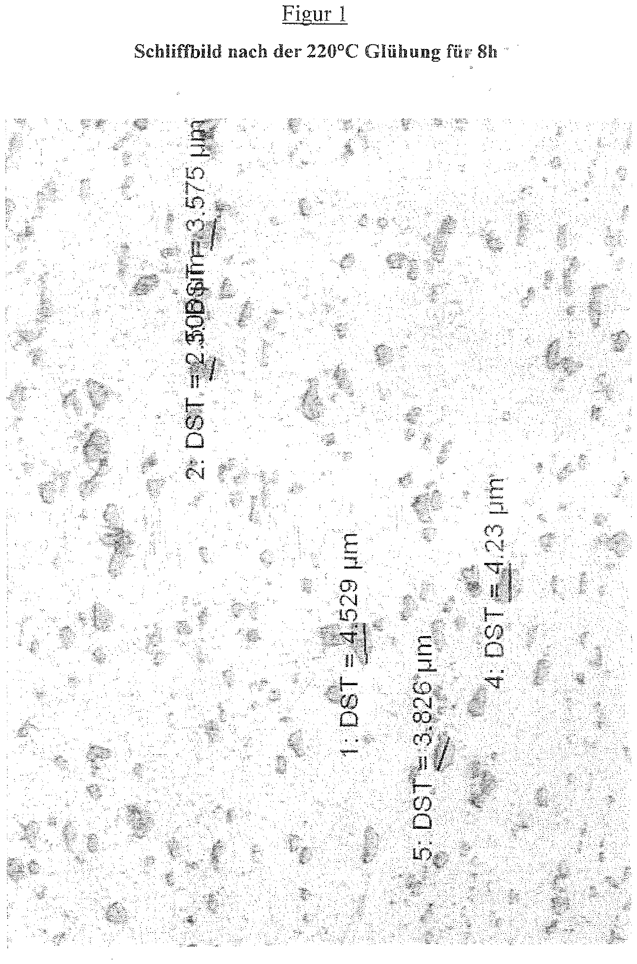

Figur 1 zeigt ein Schliffbild eines erfindungsgemäß hergestellten Materials nach Abschluss von Schritt (F) von Anspruch 7.

### Ausführliche Beschreibung der Zeichnung

In Figur 1 ist ein Schliffbild eines erfindungsgemäß hergestellten Werkstoffs nach Abschluss von Schritt (F) dargestellt. Hierbei wurde eine Aluminiumlegierung, der 1,09 % Silizium und 3,45 % Eisen zugesetzt wurde, eingesetzt. Das Material wurde in einem Stranggießverfahren vergossen. Direkt nach dem Guss und nach dem Erstarren wies das Material eine Härte von 50 HBW 1/5/30 auf.
Im Anschluss daran wurde das Material bei einer Temperatur von etwa 450 - 550 °C über 16 Stunden geglüht. Nach einer Stunde wies das Material eine Härte von 40 HBW 1/5/30 und nach zwei Stunden eine Härte von 38 HBW 1/5/30 auf, welche es auch noch nach drei Stunden, vier Stunden und fünf Stunden aufwies. Nach sechs Stunden Glühen wies das Material eine Härte von 35 HBW 1/5/30, nach sieben Stunden Glühen wies es eine Härte von 37 HBW 1/5/30 auf, nach acht Stunden Glühen wies es eine Härte von 36 HBW 1/5/30 auf, nach zwölf Stunden Glühen wies es eine Härte von 35 HBW 1/5/30 auf, und nach sechzehn Stunden Glühen, also nach dem Abschluss des Erhitzens in Schritt (B), wies es eine Härte von 36 HBW 1/5/30 auf.

Anschließend wurde das Material, das vorher eine Dicke von 8 mm aufwies, auf eine Dicke von 1,1 mm abgewalzt. Bei dem Abwalzen wurde bei einer Dicke von 1,5 mm eine Härte von 58 HBW 1/5/30 erzielt, und nachdem eine Dicke von 1,1 mm erreicht wurde, hatte das Material eine Härte von 62 HBW 1/5/30. Zum Vergleich wurde das Material ferner auf 0,45 mm abgewalzt, was zu einer Härte von 63 HBW 1/5/30 führte.

Zum Vergleich wurde ferner eine Probe des Materials weiter bei 450 - 550 °C geglüht. Hierbei wurde auch nach 20 Stunden Glühen und 24 Stunden Glühen eine Härte von 36 HBW 1/5/30 festgestellt.

Das auf 1,1 mm abgewalzte Material wurde nun auf einen Stahlträger aufgewalzt (plattiert). Vor dem Plattieren war die Ausgangsdicke des Stahls 2,8 mm und die Ausgangsdicke der Aluminiumlegierung, wie bereits erwähnt, 1,1 mm. Nach dem Plattieren lag die Dicke des Stahls zwischen 1,1 und 1,15 mm und die Dicke des Aluminiums zwischen 0,38 und 0,42 mm. Insofern bestand eine Gesamtumformung von 62 %, während das Stahlmaterial um 50 % umgeformt wurde und das Aluminiummaterial um 64 % umgeformt wurde. Durch diesen Plattierschritt wurde eine Härte von 63 HBW 1/5/30 erzielt.

Nach der Glühung des Werkstoffs bei 180 - 240 °C, wurde eine Härte von 43 HBW 1/5/30 gemessen. Der resultierende Werkstoff kann als Schliff in Figur 1 gesehen werden. Klar zu sehen sind die Ausscheidungen (mit "DST" bezeichnet) in einer Aluminiummatrix, wobei deutlich erkennbar ist, dass die Ausscheidungen einen typischen Durchmesser von ca. 4 µm haben und als Inseln in der Aluminiummatrix ausgebildet sind.
Abschließend wurde der Werkstoff auf eine Gesamtdicke von 1,33 mm gewalzt, wobei der Stahl 1 mm dick war und das Aluminium eine Dicke von 0,3 mm aufwies. Hierbei wurde das Gesamtmaterial um 13 % verformt, wobei die Stahlkomponente ebenso um 13 % verformt wurde. Das Aluminium wurde um 22 % verformt. Hierbei ergab sich eine resultierende Härte von 49 HBW 1/5/30.

## Patentansprüche

1. Verfahren zur Herstellung eines Gleitlagers aus einer Aluminiumbasislegierung, bei dem eine bleifreie Aluminium-Eisen-Silizium-Legierung, die bis zu 10 % Eisen, bis zu 3 % Silizium, bis zu 20 % Zinn und bis zu 0,2 % Strontium oder Natrium aufweist, wobei das Eisen-Silizium-Verhältnis zwischen 2:1 und 4:1 liegt, in folgenden Schritten in der angegebenen Reihenfolge verarbeitet wird:
(A) Schmelzen der Aluminium-Eisen-Silizium-Legierung,
(B) Vergießen des in Schritt (A) erzeugten Materials,
(C) Erhitzen des in Schritt (B) erzeugten Materials,
(D) Abwalzen des in Schritt (C) erzeugten Materials
(E) Aufwalzen der in Schritt (D) abgewalzten ersten Materials auf einen Stahlträger, der später zumindest einen Teil des Stahlrückens bildet,
(F) Erhitzen des in Schritt (E) erzeugten Werkstoffs,
(G) Optional: Verformen des in Schritt (F) erzeugten Werkstoffs.

2. Verfahren nach Anspruch 1, wobei die Aluminium-Eisen-Silizium-Legierung 0,02 - 0,05 %, Strontium oder Natrium aufweist.

3. Verfahren nach einem der vorhergehenden Ansprüche, wobei das Material für den Stahlrücken C10-Stahl oder C22-Stahl aufweist.

4. Verfahren nach einem der vorhergehenden Ansprüche, wobei das Vergießen in Schritt (B) durch ein Stranggießverfahren erfolgt.

5. Verfahren nach einem der vorhergehenden Ansprüche, wobei das Erhitzen in Schritt (C) bei einer Temperatur von 450 - 550 °C durchgeführt wird und 10-20 Stunden dauert.

6. Verfahren nach einem der vorhergehenden Ansprüche, wobei das Abwalzen in Schritt (D) zu einer Dicke des Materials von 0,8 - 1,2 mm führt.

7. Verfahren nach einem der vorhergehenden Ansprüche, wobei das Erhitzen in Schritt (F) bei 180 - 240 °C erfolgt und 6 - 10 Stunden dauert.

8. Verfahren nach einem der vorhergehenden Ansprüche, wobei in Schritt (G) um 5 - 15 % verformt wird.

9. Gleitlager hergestellt nach einem Verfahren gemäß der vorhergehenden Ansprüche, wobei die Aluminiumbasis-Eisen-Silizium-Legierung eine Brinell-Härte von 40 - 60 HBW 1/5/30 aufweist.

## Claims

1. A method of producing a sliding bearing made of an aluminium base alloy, wherein a lead-free aluminium-iron-silicon alloy, which comprises up to 10% iron, up to 3% silicon, up to 20% tin and up to 0.2% strontium or sodium, the iron to silicon ratio being between 2:1 and 4:1, is processed by the following steps in the specified order:
(A) melting the aluminium-iron-silicon alloy,
(B) casting the material produced in step (A),
(C) heating the material produced in step (B),
(D)rolling the material produced in step (C),
(E) rolling the first material rolled in step (D) onto a steel support which later forms at least a part of the steel back,
(F) heating the material produced in step (E),
(G) optionally: deforming the material produced in step (F).

2. The method according to Claim 1, the aluminium-iron-silicon alloy comprising 0.02 - 0.05% of strontium or sodium.

3. The method according to either of the preceding claims, the material for the steel back comprising C10 steel or C22 steel.

4. The method according to any of the preceding claims, the casting in step (B) taking place by means of a continuous casting process.

5. The method according to any of the preceding claims, the heating in step (C) being carried out at a temperature of 450 - 550°C and lasting for 10 - 20 hours.

6. The method according to any of the preceding claims, the rolling in step (D) resulting in a thickness of the material of 0.8 - 1.2 mm.

7. The method according to any of the preceding claims, the heating in step (F) taking place at 180 - 240°C and lasting 6 - 10 hours.

8. The method according to any of the preceding claims, deformation by 5 - 15% taking place in step (G).

9. A sliding bearing produced by a method according to the preceding claims, the aluminium base-iron-silicon alloy having a Brinell hardness of 40 - 60 HBW 1/5/30.

## Revendications

1. Procédé pour la fabrication d'un palier lisse en alliage à base d'aluminium, dans lequel un alliage d'aluminium, de fer et de silicium sans plomb, qui présente jusqu'à 10 % de fer, jusqu'à 3 % de silicium, jusqu'à 20 % d'étain et jusqu'à 0,2 % de strontium ou de sodium, dans lequel le rapport fer-silicium se situe entre 2:1 et 4:1, est traité dans les étapes suivantes dans l'ordre indiqué :
(A) fonte de l'alliage d'aluminium, de fer et de silicium,
(B) coulée du matériau généré à l'étape (A),
(C) réchauffage du matériau généré à l'étape (B),
(D) aplanissement au rouleau du matériau généré à l'étape (C),
(E) laminage du premier matériau aplani au rouleau à l'étape (D) sur une poutre en acier qui forme ultérieurement au moins une partie du dos en acier,
(F) réchauffage du matériau généré à l'étape (E),
(G) facultativement : déformation du matériau généré à l'étape (F).

2. Procédé selon la revendication 1, dans lequel l'alliage d'aluminium, de fer et de silicium présente 0,02 - 0,05 % de strontium ou de sodium.

3. Procédé selon l'une des revendications précédentes, dans lequel le matériau pour le dos en acier présente de l'acier C10 ou de l'acier C22.

4. Procédé selon l'une des revendications précédentes, dans lequel la coulée à l'étape (B) est effectuée par un procédé de coulée continue.

5. Procédé selon l'une des revendications précédentes, dans lequel le réchauffage à l'étape (C) est réalisé à une température de 450 - 550 °C et dure 10 - 20 heures.

6. Procédé selon l'une des revendications précédentes, dans lequel l'aplanissement au rouleau à l'étape (D) conduit à une épaisseur du matériau de 0,8 - 1,2 mm.

7. Procédé selon l'une des revendications précédentes, dans lequel le réchauffage à l'étape (F) est effectué à 180 - 240 °C et dure 6 - 10 heures.

8. Procédé selon l'une des revendications précédentes, dans lequel à l'étape (G) est déformé de 5 -15 %.

9. Palier lisse fabriqué selon un procédé selon les revendications précédentes, dans lequel l'alliage à base d'aluminium, de fer et de silicium présente une dureté Brinell de 40-60 HBW 1/5/30.
